(19) Europäisches Patentamt
European Patent Office
Office européen des brevets

(11) **EP 0 785 461 B1**

(12) **EUROPÄISCHE PATENTSCHRIFT**

(45) Veröffentlichungstag und Bekanntmachung des Hinweises auf die Patenterteilung:
**06.08.2003 Patentblatt 2003/32**

(51) Int Cl.⁷: **G03B 19/10**, H04N 5/225, H04N 1/21, G03B 17/48, G03B 7/099, G03B 17/14, G02F 1/1335

(21) Anmeldenummer: **97103340.2**

(22) Anmeldetag: **28.02.1997**

(54) **Stehbildkamera mit wahlweiser photographischer oder elektronischer Bildaufzeichnung**

View camera for selectively recording images photographically or electronically

Chambre photographique pour film ou capteur électronique

(84) Benannte Vertragsstaaten:
**CH DE DK FR LI NL**

(43) Veröffentlichungstag der Anmeldung:
**23.07.1997 Patentblatt 1997/30**

(73) Patentinhaber: **Sinar AG**
**8245 Feuerthalen (CH)**

(72) Erfinder: **Gfeller, Karl**
**8246 Langwiesen (CH)**

(74) Vertreter: **Troesch Scheidegger Werner AG**
**Patentanwälte**
**Postfach**
**8032 Zürich (CH)**

(56) Entgegenhaltungen:
WO-A-95/15054          DE-A- 3 316 009
DE-U- 29 612 423       US-A- 4 404 586
US-A- 4 738 526        US-A- 4 774 537
US-A- 4 973 999        US-A- 5 034 822
US-A- 5 282 040        US-A- 5 483 284
US-A- 5 493 353        US-A- 5 570 146
US-A- 5 592 221

**Beschreibung**

Die vorliegende Erfindung betrifft eine Standbildkamera.

Es sind sowohl Standbildkameras für den Einsatz konventioneller Filmmaterialien, d.h. für chemische Bildaufzeichnung bekannt, wie auch Standbildkameras für die elektronische Bildaufzeichnung, d.h. mit fotoelektrischen Wandlern, nachgeschalteter elektronischer Signalaufbereitung und mit Speichern für die elektronische Signalabspeicherung, siche z.B. die US 5 570 146 A.

Davon ausgehend setzt sich die vorliegende Erfindung zur Aufgabe, die Handhabungsflexibilität beim Wechsel von Fotografie auf konventionelle Filmmaterialien zu Fotografie mit elektronischer Bildaufzeichnung wesentlich zu erhöhen.

Dies wird durch die Standbildkamera nach dem Oberbegriff des Anspruchs 1 erreicht, welche sich nach dem Kennzeichen von Anspruch 1 auszeichnet. Demnach wird an ein und derselben Standbildkamera vorgeschlagen, wahlweise einen Film für chemische Bildaufzeichnung oder eine Anordnung für elektronische Bildaufzeichnung einzuführen.

Für die Bildbeurteilung, was Bildkomposition, Bildausschnitt, Schärfentiefe, Lichtführung, etc. anbelangt, wird weiter vorgeschlagen, eine Einstellscheibe, insbesondere in Form einer Mattscheibe, in den Abbildungsstrahlengang der Kamera einführbar vorzusehen.

Die Einstell- bzw. Bildbeurteilungsscheibe wird dabei vorzugsweise in die Bildebene eingeführt.

Wird die Einstellscheibe fest im Abbildungsstrahlengang der Kamera vorgesehen, so wird sie bei Einführen des Films oder der Anordnung für elektronische Bildaufzeichnung hinter die Bildebene geschoben, vorzugsweise federnd.

Obwohl die erfindungsgemässe Kamera und Film bzw. Anordnung für die elektronische Bildaufzeichnung, mit ensprechenden Anpass-Zwischenteilen, so ausgebildet sein können, dass Filmkassette oder die erwähnte Anordnung, wahlweise am Kameragehäuse montierbar sind, wird bevorzugterweise an der Kamera eine Schieberanordnung vorgesehen, welche linear- oder schwenk-beweglich gelagert ist, und die mindestens eine Aufnahme für den Film sowie eine Aufnahme für die Anordnung für elektronische Bildaufzeichnung aufweist. Gegebenenfalls weist sie eine weitere Aufnahme für die Einstellscheibe, vorzugsweise eine Mattscheibe, auf. Mittels der Schieberanordnung wird jeweils die erwünschte Aufnahme selektiv in den Abbildungsstrahlengang der Kamera bewegt.

Bei der Bildaufzeichnung, insbesondere auf Film, aber gegebenenfalls auch elektronisch, wird die Belichtungszeit angepasst, insbesondere entsprechend der Empfindlichkeit des Aufnahmemediums und der Beleuchtungsstärke.

Als Anordnung für elektronische Bildaufzeichnung wird bevorzugterweise eine monochrome und/oder multichrome Anordnung eingesetzt, sei bevorzugterweise eine monochrome CCD-Anordnung und/oder eine multichrome CCD-Anordnung, vorzugweise mit Mosaikfiltern. Werden beide Anordnungen für elektronische Bildaufzeichnung vorgesehen, so wird die Flexibilität gar weiter erhöht, indem rasch von elektronischer Monochromaufzeichnung zu elektronischer Multichromaufzeichnung gewechselt werden kann.

Wird als Anordnung für die elektronische Bildaufzeichnung ausschliesslich eine monochrome Anordnung vorgesehen, oder wird nebst einer multichromen Anordnung, wie beispielsweise einer CCD-Anordnung mit Mosaikfiltern, auch eine monochrome Anordnung für die erwähnte Bildaufzeichnung vorgesehen, so ist an der erfindungsgemässen Standbildkamera, vorzugsweise zwischen auswechselbarem Objektiv und der Bildebene, eine Filteranordnung vorgesehen, mit einer vorgegebenen Anzahl schmalbandiger Farbfilter, welche selektiv und vorzugsweise motorisch in den Abbildungsstrahlengang einführbar sind. Als schmalbandige Farbfilter werden vorzugsweise je ein Rot-, Grün- und Blaufilter (RGB) vorgesehen, für additives Verfahren, oder aber Cyan, Magenta, Yellow- und Black- (CMYK) Filter, z.B. für Farbdruck im subtraktiven Verfahren.

Wenn die Farbfilter im Objektivblendenraum oder vor dem Objtiv angeordnet werden resultiert dadurch keine Fokusverlängerung. Wird jedoch, wie bevorzugt um ein kompaktes und einfach zu handhabendes Baukastenkamerasystem zu realisieren, die erwähnte Farbfilteranordnung zwischen dem auswechselbaren Objektiv und der Bildebene, in welcher die monochrome Anordnung für elektronische Bildaufzeichnung, wie insbesondere die monochrome CCD-Anordnung, verschiebbar ist, angeordnet, so bewirken die erwähnten Filter eine Fokusverlängerung entsprechend

$$\Delta f = d \cdot \frac{n-1}{n}$$

worin

d die Filterglasdicke und
n den Brechungsindex des Filterglasmateriales bezeichnen.

Dies wird in höchst einfacher Art und Weise dadurch berücksichtigt, dass im Beurteilungsbetrieb eine breitbandig weisslicht-transmittierende Scheibe in den Abbildungsstrahlengang eingeführt wird, mit entsprechender Dicke und entsprechendem Brechungsindex, die, bezüglich Fokusverhältnissen, praktisch die nachmals einzuschaltenden Farbfilter simuliert.

Anstelle oder zusätzlich zur "passiven" Bildbeurteilungsscheibe, wie der obgenannten Mattscheibe, kann bevorzugterweise eine foto-elektrische Wandleranordnung an der Kamera auch hierfür vorgesehen sein, mit einem Livebild-Displayschirm oder mit einem Anschluss für das externe Anschliessen eines solchen Schirms.

Bei der Bildbeurteilung mittels CCD und anhand eines Livebilddisplays wird das Bild optisch mit einer vorgebbaren oder vorgegebenen Frequenz, z.B. zwischen zwei und fünf Hz, zerhackt. Dies erfolgt, an sich erfinderisch, vorzugsweise mit einem elektronischen Verschluss, der zusätzlich zum mechanischen Kameraverschluss vorgesehen ist, vorzugsweise mittels eines getakteten LCD-Verschlusses.

In diesem Fall wird bevorzugterweise der elektronische Verschluss, wie erwähnt, vorzugsweise ein LCD-Verschluss, mit Bezug auf die Farbfilter, welche nachmals, d.h. bei Bildaufzeichnung, einzulegen sind, so ausgelegt, dass er dieselbe Fokusverlängerung bewirkt. Da der LCD-Verschluss nur im Bildbeurteilungsmode eingesetzt wird, Farbfilter normalerweise nur im Bildaufzeichnungsmode mittels monochromer Anordnung, kompensiert mithin der vorgesehene LCD-Verschluss die filterbewirkte Fokusverlängerung.

Bei Vorsehen einer multichromen Anordnung für die elektronische Bildaufzeichnung, vorzugsweise einer CCD-Anordnung mit Mosaikfiltern, werden die Fokusverlängerungsverhältnisse beim Einbau bzw. beim Einschieben der erwähnten Anordnung berücksichtigt, beispielsweise durch entsprechende Tiefenstaffelung bezüglich der Bildebene am Schieber.

Bei Bildaufzeichnung mit einer multichromen Anordnung zur elektronischen Bildaufzeichnung, also vorzugsweise mit einer CCD-Anordnung mit Mosaikfiltern, wird im Bildaufzeichnungsmode die Fokuslängenveränderung durch den LCD-Verschluss im Bildbeurteilungsmode, durch eine breitbandig transmittierende Scheibe kompensiert.

Bevorzugterweise werden konstruktiv die erwähnten Farbfilter, die erwähnte breitbandig transmittierende Scheibe zur Fokuslängenanpassung, der LCD-Verschluss sowie offene Blendensegmente auf einer motorisch getriebenen Trägeranordnung vorgesehen, alle auf einem Trägerrad oder bevorzugterweise auf mehreren, insbesondere bevorzugterweise und zur Aufrechterhaltung einer höchstmöglichen Kompaktheit der Kamera auf zwei getrennt und unabhängig voneinander für jeweilige Kombinationen stellbaren Trägerrädern.

Wie ersichtlich, kann an der erfindungsgemässen Standbildkamera die Bildbeurteilung an einer Einstellscheibe, vorzugsweise Mattscheibe, oder einer elektronischen Bilderfassungsanordnung, insbesondere der ohnehin vorzusehenden elektronischen Bildaufzeichnungsanordnung, jeweils mit nachgeschaltetem Livebilddisplay vorgenommen werden, die eigentliche Bildaufzeichnung an einem Film oder einer monochromen oder multichromen elektronischen Bildaufzeichnungsanordnung. Entsprechend werden für den Bildbeurteilungsmode und den Bildaufzeichnungsmode unterschiedliche optische Vorrichtungen in den Abbildungsstrahlengang eingeschoben. Dies erfolgt bevorzugterweise automatisch, indem an der Kamera Eingabeorgane für die Anwahl einer Einstellscheibe oder einer elektronischen Bilderfassungsanordnung als Bildbeurteilungsmedium vorgesehen sind und/oder Sensoren für die Erfassung des momentan eingeführten Bildbeurteilungsmediums, weiter Eingabeorgane für das Bildaufzeichnungsmedium, und es wird automatisch ein elektronischer Verschluss, wie vorzugsweise der erwähnte LCD-Verschluss und/oder eine Breitbandfilter-Kompensationsscheibe und/oder selektive Farbfilter und/oder offene Blendensegmente, je nach gewähltem Bildbeurteilungsmedium und gewähltem Bildaufzeichnungsmedium, bei Bildbeurteilung und -aufzeichnung, selektiv in den Abbildungsstrahlengang der Kamera eingeführt.

Die Erfindung wird anschliessend beispielsweise anhand von Figuren erläutert, wobei sich dem Fachmann bereits aus dem Gesagten die wesentlichen Merkmale der vorliegenden Erfindung klar offenbaren.

In den Figuren zeigen:

Fig. 1    perspektivisch eine erfindungsgemässe Standbildkamera in vereinfachter, schematischer Darstellung und in heute bevorzugter Ausführungsform,

Fig. 2    ausgehend von der Kamera nach Fig. 1 eine noch weiter vereinfachte erfindungsgemässe Ausführungsform,

Fig. 3    schematisch und perspektivisch die Anordnung der bevorzugterweise an der erfindungsgemässen Standbildkamera gemäss den Fig. 1 oder 2 vorgesehenen optischen Organe,

Fig. 4    schematisch eine bevorzugte Anordnung einer Einstellscheibe an der Kamera gemäss Fig. 1 oder Fig. 2,

Fig. 5    ausgehend von der Anordnung nach Fig. 3 ein Signalfluss/Funktionsblock-Diagramm der automatischen Aktivierung von Organen im Abbildungsstrahlengang, je nach gewähltem Bildbeurteilungs- und Bildaufzeichnungsmedium.

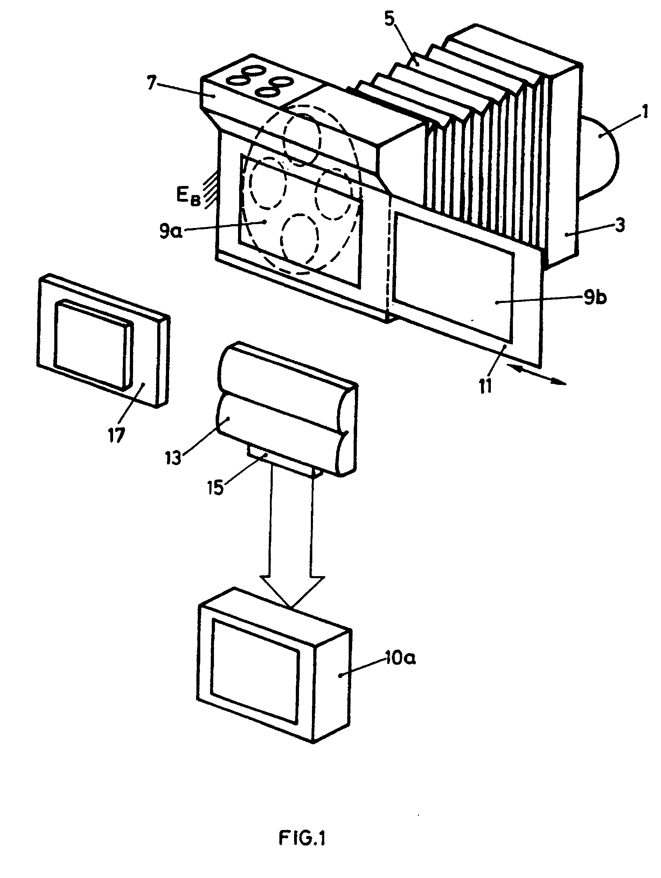

Gemäss Fig. 1 umfasst eine erfindungsgemässe Standbildkamera in üblicher Art und Weise ein Objektiv 1 auswechselbar beispielsweise an einer Objektivplatte 3 montiert, welche beispielsweise über einen Balg 5 mit dem Kameragehäuse 7 verbunden ist. In der schematisch angedeuteten Bildebene EB am Kameragehäuse 7 sind, an einem Schieber 11, mindestens zwei Aufnahmen 9a und 9b vorgesehen, welche selektiv in den Abbildungsstrahlengang der Kamera eingeführt werden können. In Fig. 1 ist eine bevorzugte Ausführungsform dargestellt, bei der die mindestens zwei vorgesehenen Aufnahmen 9 an einem linearen Schieber 11 angeordnet sind.

Mit 13 ist eine in die Aufnahme 9b oder 9a einzubringende, beispielsweise mittels eines Schnappverschlusses dort zu befestigende, monochrome oder multichrome Anordnung für elektronische Bildaufzeichnung, wie eine monochrome oder multichrome CCD-Anordnung, mit elektrischen Ausgängen 15 dargestellt, bei 17 eine in der Aufnahme 9a oder 9b ebenso einklickbare Filmträgerkassette.

Es versteht sich aber von selber, dass die Art und Weise, wie die Filmkassette bzw. die Anordnung für die elektronische Bildaufzeichnung in das Kameragehäuse 7 eingeführt werden, ob mit einem Schieber, wie bei 11 dargestellt, oder mittels eines Drehschiebers oder gar mittels eines einzigen kombinierten Aufnahmeschlitzes, wo die entsprechenden Kassetten 13 bzw. 17 alternativ eingeschoben werden können, bezüglich der Erfindung, unter ihrem weitesten Aspekt gleichwertige Alternativen sind, die sich dem Fachmann, je nach Bedarf, entsprechend eröffnen.

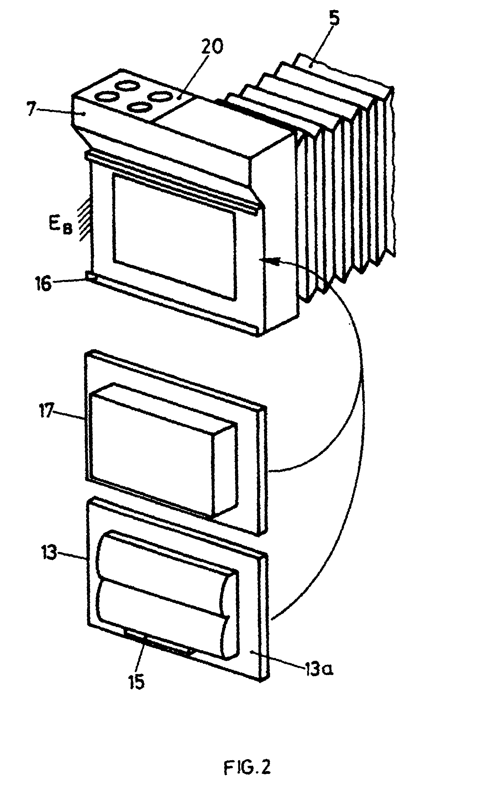

In einer weiter vereinfachten Ausführungsform der erfindungsgemässen Standbildkamera gemäss Fig. 2 wird die Filmträgerkassette 17 oder die Anordnung 13 für elektronische Bildaufzeichnung alternativ mittels entsprechender Positionier- und Fixierungsorgane 16, wie schematisch in Fig. 2 dargestellt, in den Abbildungsstrahlengang der Standbildkamera eingeführt. Hierzu sind Kamera, Film 17 und Anordnung 13 für die elektronische Bildaufzeichnung praktisch als Set zusammenpassend und es sind am Film 17 und/oder an der elektronischen Anordnung 13 Adapterplatten, wie bei 13a dargestellt, vorgesehen, damit die alternativ an der Kamera anzubringenden Aufzeichnungsmedien bezüglich Form und Positions- bzw. Fixationsmitteln mit den an der Kamera vorgesehenen übereinstimmen.

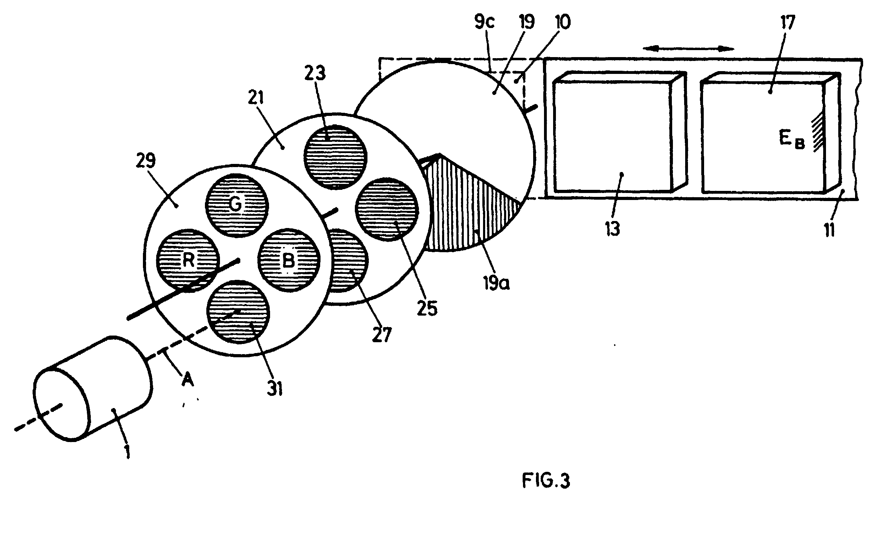

In Fig. 3 sind, perspektivisch und schematisch, die verschiedenen erfindungsgemäss und an einer bevorzugten Ausführungsform der erfindungsgemässen Standbildkamera vorgesehenen optisch wirksamen Organe schematisch dargestellt.

Der Bildebene $E_B$ vorgelagert, ist der mechanische Kameraverschluss 19, beispielsweise ausgebildet als motorisch drehbare Verschlussscheibe mit variabler Sektoröffnung 19a.

Gegen das Objektiv 1 hin, dem mechanischen Verschluss 19 folgend, ist eine motorisch in vorgegebenen Drehwinkeln schwenkbare Trägerscheibe 21 vorgesehen, mit einem LCD-Verschluss-Segment 23, einem Segment 25 mit Weisslicht-transmittierender Fokuslängen-Anpass-Scheibe mit gegebener Dicke und mit gegebenem Brechungsindex, weiter mit einem Leersegment bzw. einer Blende 27.

Der Trägerscheibe 21, gegen das Objektiv 1 hin wiederum folgend, ist eine weitere motorisch in vorgegebenen Drehwinkeln schwenkbare Filter-Trägerscheibe 29 vorgesehen, beispielsweise mit den schmalbandigen Filtersegmenten RGB und einem Leersegment bzw. einer Blende 31.

Für die Bildbeurteilung vor der Bildregistrierung bzw. Aufzeichnung ist vorzugsweise in der Bildebene EB und damit vorzugsweise am Schieber bei der Kamera nach Fig. 1 oder an der Kamera selber in den Ausführungsformen gemäss Fig. 1 oder Fig. 2, wie in Fig. 3 gestrichelt dargestellt, eine Einstellscheibe 10, vorzugsweise in Form einer Mattscheibe, bei vorgesehenem Schieber, z.B. an einer weiteren Aufnahme 9c gemäss Fig. 3 vorgesehen.

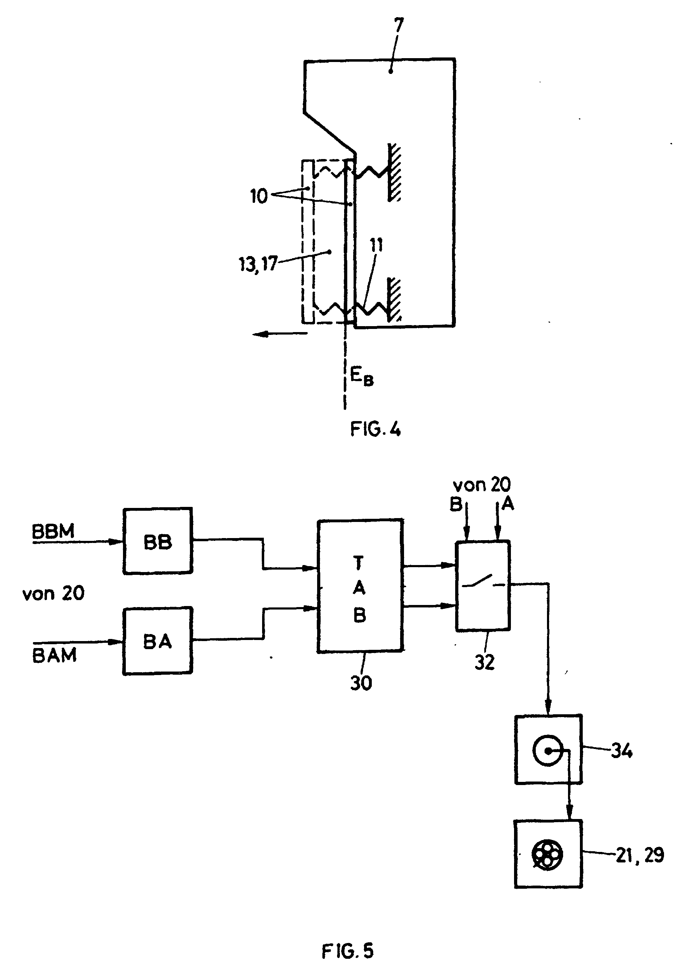

Bevorzugterweise wird diese Einstellscheibe wie in Fig. 4 schematisch dargestellt angeordnet. In beiden Ausführungsformen gemäss Fig. 1 oder Fig. 2 wird die Einstellscheibe 10, wie schematisch in Fig. 4 dargestellt, verschieblich, vorzugsweise, wie schematisch mittels Federn 11 dargestellt, federnd verschieblich, am Kameragehäuse 7 gelagert. Sie liegt im Bildbeurteilungsmode in der Bildebene EB und wird erst bei Einführen eines Films 17 oder der Anordnung 13 für elektronische Bildaufzeichnung, wie erwähnt vorzugsweise federnd, aus der Bildebene EB wegverschoben, um dann im Bildaufzeichnungsmode hinter das entsprechende Bildaufzeichnungsmedium positioniert zu werden.

Die Bildbeurteilung kann aber zusätzlich oder alternativ an der Anordnung 13 für elektronische Bildaufzeichnung erfolgen, sei diese am Schieber 11 gemäss Fig. 1 vorgesehen, oder gemäss Fig. 2 am Kameragehäuse 7 montiert. Dies sowohl, wenn es sich bei der vorgesehenen Anordnung für elektronische Bildaufzeichnung um eine Multichromanordnung, vorzugsweise eine CCD-Anordnung mit Mosaikfiltern handelt, wie auch wenn es sich dabei um eine Monochromanordnung handelt. In diesem Fall wird die Bildbeurteilung an einem Livebilddisplay bzw. Bildschirm 10a vorgenommen (siehe Fig. 1), welcher an die Ausgänge 15 der Anordnung 13 gemäss Fig. 1 oder Fig. 2 angeschlossen wird und entweder an der Kamera selber angeordnet ist oder extern steht.

Für eine Bildaufzeichnung mit Film wird mithin zuerst die Bildbeurteilung mit der erwähnten Einstellscheibe 10 oder der erwähnten Anordnung 13 für elektronische Bildaufzeichnung, dann erst als Bilderfassungsanordnung wirkend, vorgenommen, wobei die Belichtung mit einer vorgebbaren oder vorgegebenen Frequenz von beispielsweise 2 bis 5 Hz gechoppert wird. Obwohl dies mit dem mechanischen Verschluss 19 gegebenenfalls realisiert werden kann, wird bevorzugterweise hierfür gemäss Fig. 3 das LCD-Verschluss-Segment 23 an der Trägerscheibe 21 motorisch in den Abbildungsstrahlengang A gedreht. Weil der im Beurteilungsmode eingesetzte LCD-Verschluss eine Fokuslän-

EP 0 785 461 B1

genveränderung bewirkt, wird nachmals für die Bildaufzeichnung auf dem Film 17 anstelle des LCD-Verschluss-Segmentes 23 die Weisslicht-transmittierende Scheibe 25 am Trägerrad 21 in den Abbildungsstrahlengang A gedreht, um die LCD-bewirkte Fokuslängenänderung auch im Bildaufzeichnungsmode zu realisieren.

Sowohl im Bildbeurteilungsmode wie auch im Bildaufzeichnungsmode ist die Leerblende 31 am Trägerrad 29 in den Abbildungsstrahlengang gedreht. Die Bildaufzeichnung erfolgt mit dem mechanischen Verschluss 19.

Soll die Bildaufzeichnung mittels einer multichromen Anordnung für elektronische Bildaufzeichnung, wie einer CCD-Anordnung mit Mosaikfiltern vorgenommen werden, so wird die Bildbeurteilung entweder an der erwähnten Einstellscheibe 10 oder aber, und in diesem Fall bevorzugterweise, direkt mittels der auch für die Bildregistrierung zu verwendenden multichromen Anordnung 13 vorgenommen.

Wird dabei als Beurteilungsmedium die Scheibe 10 eingesetzt, so wird in diesem Mode die Blende 31 am Trägerrad 29, die Blende 27 am Trägerrad 21 in den Abbildungsstrahlengang geschwenkt, ebenso für den Bildaufzeichnungsmode.

Wird hingegen die Bildbeurteilung an der auch für die Bildaufzeichnung zu verwendenden multichromen Anordnung vorgenommen oder an einer monochromen Anordnung, so wird im Bildbeurteilungsmode die Blende 31 des Trägerrades 29, des LCD-Verschluss-Segmentes 23 am Trägerrad 21 in den Abbildungsstrahlengang A gedreht, im Bildaufzeichnungsmode wiederum die Blende 31, und, anstelle des LCD-Verschluss-Segmentes 23, die Weisslicht-transmittierende Scheibe 25 am Trägerrad 21.

Soll die Bildaufzeichnung mittels einer monochromen Anordnung 13 für elektronische Bildaufzeichnung vorgenommen werden, so kann die Bildbeurteilung wiederum mittels der Einstellscheibe 10 oder mittels der Anordnung 13 für elektronische Bildaufzeichnung vorgenommen werden. Im Bildbeurteilungsmode mit der Scheibe 10 als Medium wird die Blende 31 am Trägerrad 29 sowie die Weisslicht-transmittierende Scheibe 25 am Trägerrad 21 in den Abbildungsstrahlengang eingedreht. Bei der nachmaligen Bildaufzeichnung wird jeweils eines der Farbfiltersegmente am Trägerrad 29 sowie das Blendensegment 27 am Trägerrad 21 in den Abbildungsstrahlengang gedreht.

Erfolgt die Bildbeurteilung in diesem Fall mittels der Anordnung für elektronische Bildaufzeichnung, in diesem Fall erst als Bildregistrierungsanordnung wirkend, so wird im Bildbeurteilungsmode die Blende 31, das LCD-Verschluss-Segment 23 in den Abbildungsstrahlengang eingedreht, im Bildaufzeichnungsmode jeweils eines der Farbfiltersegmente am Trägerrad 29 und die Blende 27 am Trägerrad 21.

In der nachfolgenden Tabelle sind für die drei Aufzeichnungsmedien Film, Multichromanordnung und Monochromanordnung für die elektronische Bildaufzeichnung und abhängig von der Wahl des Mediums für die Bildbeurteilung, die gemäss Fig. 3 jeweils eingeschwenkten Segmente an den Trägerscheiben 29 bzw. 21 zusammengestellt. Dabei bezeichnen:

FF     selektive Farbfilter an Scheibe 29
31     Leerblende am Trägerrad 29
23     LCD-Verschluss-Segment am Trägerrad 21
25     Weisslicht-transmittierende Scheibe als Fokuslängenanpassfilter mit gegebener Dicke und gegebenem Brechungsindex des Scheibenmaterials
27     Leerblende am Trägerrad 21

| Aufzeichnungsmedium | Bild-Beurteilung mittels | in A eingeschwenkt | Aufzeichnung in A eingeschwenkt |
|---|---|---|---|
| Film | Scheibe | 31, 27 | 31, 27, |
| | multichr. CCD | 31, 23 | 31, 25 |
| | monochr. CCD | 31, 23 | 31, 25 |
| CCD multichr. | Scheibe | 31, 27 | 31, 27 |
| | multichr. CCD | 31, 23 | 31, 25 |
| | monochr. CCD | 31, 23 | 31, 25 |

(fortgesetzt)

| Aufzeichnungsmedium | Bild-Beurteilung mittels | in A eingeschwenkt | Aufzeichnung in A eingeschwenkt |
|---|---|---|---|
| CCD monochr. | Scheibe | 31, 23 | FF, 27 |
| | CCD multichr. | 31, 23 | FF, 27 |
| | CCD monochr. | 31, 23 | FF, 27 |
| | | oder | |
| | | FF, 23 | FF, 25 |

Es versteht sich von selber, dass je nach Bedürfnis die Konstellation der Kamera geändert werden kann, und nicht alle Möglichkeiten jeweils gleichzeitig eingebaut sein müssen.

Gemäss den Fig. 1 und 2 sind vorzugsweise am Kameragehäuse Einstellorgane 20, wie Tasten, in einem Tastenfeld vorgesehen.

Gemäss Fig. 5 wird damit das für den Bildbeurteilungsmode zu verwendende Medium, also Einstellscheibe 10 oder eine der vorgesehenen Anordnungen für elektronische Bilderfassung, angewählt und abgespeichert, wie mit dem Signal BBM zur Speichereinheit BB dargestellt. Anstelle einer manuellen Eingabe kann hier auch mittels Sensoren erfasst werden, welches Medium in Bildbeurteilungsposition gelegt ist.

Mit dem Signal BAM an eine Speichereinheit BA wird dasjenige Medium festgelegt, welches nachmals der Bildaufzeichnung dienen soll, also wiederum Filmträgerkassette 17 oder eine vorgesehene Anordnung 13 zur elektronischen Bildaufzeichnung. Mit diesen beiden Vorgaben, ausgangsseitig der erwähnten Speicher BB bzw. BA wird in die Tabelleneinheit 30 eingegangen und gemäss der oben aufgeführten Tabelle werden die jeweils notwendigen Kombinationen der anhand der Trägerräder 29 bzw. 21, jeweils im Beurteilungs- und im Aufzeichnungsmode, in den Abbildungsstrahlengang einzudrehenden Segment bestimmt. Mittels einer der Tabelleneinheit 30 nachgeschalteten Selektionseinheit 32 mit Wahltastern, Bund A, wird der momomentan einzustellende Mode, d.h. Beurteilungsmode oder Aufzeichnungsmode, gewählt. Entsprechend werden die in der Tabelleneinheit 30 ermittelten Kombinationen an die Stellmotoren der Stellmotoreinheit 34 für die Trägerscheiben durchgeschaltet und mittels letzterer die Trägerscheiben 21 bzw. 29 in die geforderten Positionen gedreht.

**Patentansprüche**

1. Standbildkamera mit einer Schieberanordnung (11), welche bezüglich des Kameragehäuses (7) linear verschieblich gelagert ist und woran eine Anordnung (13) für elektronische Bildaufzeichnung montiert ist, **dadurch gekennzeichnet, dass** die Schieberanordnung (11) eine Aufnahme (9) für ein fotografisches Bildaufzeichnungsmedium (17) hat und mittels der Schieberanordnung (11) selektiv die Anordnung (13) für elektronische Bildaufzeichnung oder die Aufnahme (9) für ein fotografisches Bildaufzeichnungsmedium in den Abbildungsstrahlengang (A) der Kamera schiebbar oder schwenkbar ist.

2. Standbildkamera nach Anspruch 1, **dadurch gekennzeichnet, dass** für die Bildbeurteilung eine Einstellscheibe (10), vorzugsweise eine Mattscheibe, in den Abbildungsstrahlengang (A) der Kamera einführbar ist.

3. Standbildkamera nach Anspruch 2, **dadurch gekennzeichnet, dass** die Einstellscheibe (10) im Abbildungsstrahlengang (A) der Kamera montiert ist, bei nicht eingeführter Aufnahme (17) bzw. nicht eingeführter Anordnung (13) für die elektronische Bildaufzeichnung, in der Bildebene (BE) liegt, und bei Einschieben oder Einschwenken der Aufnahme bzw. der Anordnung, vorzugsweise federnd, hinter die Bildebene (BE) geschoben wird.

4. Standbildkamera nach einem der Ansprüche 1 bis 3, **dadurch gekennzeichnet, dass** die Anordnung (13) für eine elektronische Bildaufzeichnung eine monochrome Anordnung und/oder eine multichrome Anordnung umfasst, vorzugsweise eine monochrome CCD-Anordnung und/oder eine multichrome CCD-Anordnung mit Mosaikfiltern.

5. Standbildkamera nach einem der Ansprüche 1 bis 4, **dadurch gekennzeichnet, dass** zur Bildbeurteilung eine Anordnung zur elektronischen Bilderfassung (13) mit nachgeschaltetem Livebild-Display (10a) vorgesehen ist.

6. Standbildkamera nach Anspruch 5, **dadurch gekennzeichnet, dass** ein elektronischer Verschluss vorgesehen ist, vorzugsweise ein LCD-Verschluss (23), der im Bildbeurteilungsmode mit vorgegebener oder vorgebbarer Frequenz geöffnet und geschlossen wird.

7. Standbildkamera nach einem der Ansprüche 1 bis 6, **dadurch gekennzeichnet, dass** zwischen dem Objektiv (1) und der Bildebene (BE) der Kamera eine Filteranordnung (29) vorgesehen ist, mit einer vorgegebenen Anzahl Farbfiltern (RGB), welche vorzugsweise motorisch selektiv in den Abbildungsstrahlengang (A) einführbar sind.

8. Standbildkamera nach Anspruch 7, **dadurch gekennzeichnet, dass** die Filteranordnung (29) als Trägerscheibe mit Filterscheibensegmenten und vorzugsweise einem offenen Blendensegment (31) ausgebildet ist.

9. Standbildkamera nach einem der Ansprüche 1 bis 8, **dadurch gekennzeichnet, dass** in den Abbildungsstrahlengang (A) ein Breitband-Transmissionsfilter (25) einführbar ist, zur Angleichung der Fokussierungslängen bei Bildbeurteilung und bei Bildaufzeichnung.

10. Standbildkamera nach Anspruch 6 und einem der Ansprüche 8 oder 9, **dadurch gekennzeichnet, dass** der elektronische Verschluss dieselbe Fokuslängenänderung bewirkt, wie jeweils ein Farbfilter der Filteranordnung und/oder wie das Breitbandfilter.

11. Standbildkamera nach einem der Ansprüche 1 bis 10, **dadurch gekennzeichnet, dass**

   - Eingabeorgane (BBM, 20) für die Anwahl einer Einstellscheibe (10) oder einer elektronischen Bilderfassungsanordnung (13) als Bildbeurteilungsmedium vorgesehen sind und/oder Sensoren für die Erfassung des momentan eingeführten Bildbeurteilungsmediums (10, 13),

   - Eingabeorgane (BAM, 20) für das Bildaufzeichnungsmedium (17, 13) vorgesehen sind,

   - und dass, automatisch, ein elektronischer Verschluss (23) und/oder mindestens ein Breitbandfilter (25) und/oder mindestens ein selektives Farbfilter (RGB) und/oder mindestens eine Leerblende (31, 27) in vorgegebener Kombination und je nach gewähltem Bildbeurteilungsmedium und gewähltem Bildaufzeichnungsmedium, bei Bildbeurteilung und -aufzeichnung, in den Abbildungsstrahlengang (A) der Kamera eingeführt werden.


**Claims**

1. A still photo camera having a slide arrangement (11) mounted linearly slidable with respect to the camera housing (7) and having mounted thereon an arrangement (13) for an electronic image recording, **characterized in that** said slide arrangement (11) comprises a receptacle (9) for a chemical image recording means (17) and **in that** said arrangement (13) for electronic image recording or said receptacle (9) for the chemical image recording means may be selectively slid or pivoted by means of said slide arrangement into the image beam path (A) of the camera.

2. A still photo camera according to claim 1, comprising an adjusting disk (10), preferably a ground-glass disk, insertable into the image beam path (a) of the camera for image evaluation.

3. A still photo camera according to claim 2, wherein the adjusting disk (10) is mounted in the image beam path (A) of the camera and lies in the focal plane (BE) when the receptacle (9) and the arrangement for electronic image recording (13) are not inserted, and lies behind the focal plane (BE) upon insertion preferably against spring force, of either of the receptacle and the electronic arrangement.

4. A still photo camera according to any of claims 1 to 3, wherein the arrangement for electronic image recording (13) includes a monochrome arrangement and/or a multichrome arrangement, preferably a monochrome CCD arrangement and/or a multi-chrome CCD arrangement with mosaic filters.

5. A still photo camera according to any of claims 1 to 4, wherein the arrangement for electronic image acquisition (13) includes a live image display (10a) for image evaluation.

6. A still photo camera according to claim 5, including an electronic shutter, preferably a LCD-shutter (23), being opened and closed in the image evaluation mode at a selected frequency.

7. A still photo camera according to any of claims 1 to 6, comprising a filter arrangement (29) being positioned between the lens (1) and the focal plane (BE) of the camera, comprising a plurality of predetermined colour filters (RGB) for a preferably motor driven selective insertion into the image beam path (A).

8. A still photo camera according to claim 7, wherein the filter arrangement (29) comprises a carrier disk supporting a plurality of filter disk segments and preferably one open screen segment (31).

9. A still photo camera according to any of claims 1 to 8, including a broad-band transmission filter (25) being insertable in the image beam path (A) for equalizing the focusing lengths during an image evaluation mode and an image recording mode.

10. A still photo camera according to claim 6 and any of claims 8 or 9, wherein the electronic shutter causes the same change of focal length as a colour filter of the filter arrangement and/or the broad-band filter.

11. A still photo camera according to any of claims 1 to 10, comprising

    - input means (BBM, 20) for selecting an adjusting disk (10) or an arrangement for electronic image recording (13) as image evaluation means and/or sensors for detecting of the actually inserted image evaluation means (10, 13),

    - input means (BAM, 20) for the image recording means (17, 13),

    - and wherein for image evaluating and image recording there are automatically inserted into the image beam path (A) an electronic shutter (23) and/or at least one broad band filter (25) and/or at least one selectable colour filter (RGB) and/or at least one open screen (31, 27) in the predetermined combination and in accordance with the selected image evaluation medium and the selected image recording medium.


**Revendications**

1. Appareil photographique à image immobile comprenant une structure à tiroir (11) montée de manière à pouvoir se déplacer linéairement par rapport au boîtier (7) de l'appareil et sur laquelle est monté un dispositif (13) pour l'enregistrement électronique d'images, **caractérisé en ce que** la structure à tiroir (11) présente une réception (9) pour un milieu pour l'enregistrement photographique d'images (1) et **en ce que** la structure à tiroir (11) permet d'introduire par glissement ou par pivotement dans la marche des rayons de l'image (A) sélectivement le dispositif pour l'enregistrement électronique d'images (13) ou ladite réception (9) pour le milieu pour l'enregistrement photographique d'images.

2. Appareil selon la revendication 1, **caractérisé en ce qu'**il comprend un disque d'ajustement (10), de préférence un verre dépoli, qui peut être introduit dans la marche des rayons de l'image (A) de l'appareil, pour l'évaluation de l'image.

3. Appareil selon la revendication 2, **caractérisé en ce que** le disque d'ajustement (10) est monté dans la marche des rayons de l'image (A) de l'appareil et se trouve dans le plan focal (BE) lorsque la réception (9) et la dispositif pour l'enregistrement électronique d'images (13) ne sont pas introduit, et est glissé derrière le plan focal (BE) après l'introduction, de préférence contre une force ressort, de ladite réception respectivement dudit dispositif.

4. Appareil selon l'une des revendications 1 à 3, **caractérisé en ce que** le dispositif (13) pour l'enregistrement électronique d'images inclut un arrangement monochrome et/ou un arrangement multichrome, de préférence un arrangement CCD monochrome et/ou un arrangement CCD multichrome avec des filtres mosaïques.

5. Appareil selon l'une des revendications 1 à 4, **caractérisé en ce que** le dispositif pour l'acquisition électronique d'images (13) est muni d'un écran représentant l'image en direct pour l'évaluation de l'image.

6. Appareil selon la revendication 5, **caractérisé en ce qu'**il comprend un obturateur électronique, de préférence un obturateur LCD (23), qui dans le mode d'évaluation est ouvert et fermé avec une fréquence choisie.

7. Appareil selon l'une des revendications 1 à 6, **caractérisé en ce qu'**il comprend un arrangement de filtres (29) positionné entre l'objectif (1) et le plan focal (BE) de l'appareil comprenant un nombre prédéterminé de filtres couleurs (RGB) qui peuvent être introduits sélectivement, de préférence par moteur, dans la marche des rayons de l'image (A).

8. Appareil selon la revendication 7, **caractérisé en ce que** l'arrangement de filtres (29) comprend un disque porteur portant des segments de disque filtre et de préférence un segment de disque obturateur (31) ouvert.

9. Appareil selon l'une des revendications 1 à 8, **caractérisé en ce qu'**il comprend un filtre de transmission à large bande (25) qui peut être introduit dans la marche des rayons de l'image (A) pour égaliser les langueurs de focalisation lors dans le mode d'évaluation d'images et dans le mode d'enregistrement d'images.

10. Appareil selon la revendication 6 et l'une des revendications 8 ou 9, **caractérisé en ce que** l'obturateur électronique provoque le même changement de longueur de focalisation qu'un des filtres couleur de l'arrangement de filtres et/ou que le filtre à large bande.

11. Appareil selon l'une des revendications 1 à 10, **caractérisé par**:

- des organes d'entrée (BBM, 20) pour la sélection d'un disque d'ajustement (10) ou d'un dispositif (13) pour l'enregistrement électronique d'images (13) comme milieu d'évaluation d'images et/ou des détecteurs pour détecter le milieu d'évaluation d'images (10, 13) momentanément introduit,

- des organes d'entrée (BAM, 20) pour le milieu d'enregistrement d'images (17, 13),

- et dans lequel sont introduit automatiquement dans la marche des rayons de l'image (A), en vue de l'évaluation et de l'enregistrement de l'image, un obturateur électronique (23) et/ou au moins un filtre à large bande (25) et/ou au moins un filtre couleur sélectif (RGB) et/ou au moins un écran ouvert (31, 27) dans une combinaison prédéterminée et en accord avec le milieu d'évaluation d'images choisi et le milieu d'enregistrement d'images choisi.

FIG.1

EP 0 785 461 B1

FIG.2

11

FIG.3

EP 0 785 461 B1

FIG. 4

FIG. 5